# EUROPEAN PATENT APPLICATION

(11) **EP 2 754 962 A2**
(43) Date of publication of application: **16.07.2014**
(21) Application number: 13187958.7
(22) Date of filing: 09.10.2013
(51) Int. Cl.: F23R 3/00, F23R 3/06, F23R 3/04

(54) **Combustors with hybrid walled liners**

(30) Priority: 10.01.2013 US 201313738619
(71) Applicant: Honeywell International Inc., Morristown, NJ 07962-2245 (US)
(72) Inventor: Critchley, Ian, Morristown, NJ New Jersey 07962-2245 (US); Kujala, Stony, Morristown, NJ New Jersey 07962-2245 (US); Guerra, Eduardo, Morristown, NJ New Jersey 07962-2245 (US)
(74) Representative: Houghton, Mark Phillip

(57) **Abstract**

A combustor (208) for a turbine engine includes a first liner (210) and a second liner (230) forming a combustion chamber (250) with the first liner. The combustion chamber is configured to receive an air-fuel mixture for combustion therein and has a longitudinal axis (201) that defines axial, radial and circumferential directions. The first liner is a first dual walled liner having a first hot wall (212) facing the combustion chamber and a first cold wall (214) that forms a first liner cavity (216) with the first hot wall. The combustor further includes a primary air admission hole (218) defined in the first hot wall and a first fixed liner seal (220) between the first hot wall and the first cold wall proximate to the primary air admission hole.

## Description

### STATEMENT REGARDING FEDERALLY SPONSORED RESEARCH OR

### DEVELOPMENT

This invention was made with Government support under Contract No. W911W6-08-2-0001 awarded by United States Army. The Government has certain rights in this invention.

### TECHNICAL FIELD

The following description generally relates to combustors for gas turbine engines, and more particularly relates to combustors with hybrid walled liners.

### BACKGROUND

A gas turbine engine may be used to power various types of vehicles and systems. For example, one type of gas turbine engine that may be used to power aircraft is a turbofan gas turbine engine. A turbofan gas turbine engine conventionally includes, for example, five major sections: a fan section, a compressor section, a combustor section, a turbine section, and an exhaust section. The fan section is typically positioned at the inlet section of the engine and includes a fan that induces air from the surrounding environment into the engine and accelerates a fraction of this air toward the compressor section. The remaining fraction of air induced into the fan section is accelerated into and through a bypass plenum and out the exhaust section.

The compressor section raises the pressure of the air it receives from the fan section, and the resulting compressed air then enters the combustor section, where a ring of fuel nozzles injects a steady stream of fuel into a combustion chamber formed between inner and outer liners. The fuel and air mixture is ignited to form combustion gases, which drive rotors in the turbine section for power extraction. The gases then exit the engine at the exhaust section.

Known combustors include inner and outer liners that define an annular combustion chamber in which the fuel and air mixture is combusted. During operation, a portion of the airflow entering the combustor is channeled through the combustor outer passageway to cool the liners and dilute the hot combustion gases within the combustion chamber. Some combustors are dual walled combustors in which the inner and outer liners each have so-called "hot" and "cold" walls. These arrangements may enable impingement effusion cooling in which cooling air flows through cavities formed between the hot and cold walls. In order to maximize cooling, seals may be provided between the respective hot and cold walls at the forward and aft edges to seal the cavities.

A consequence of the dual walled combustor design is the inherent difference in operating temperature between the walls of the liners. For example, the hot walls are subjected to high temperature combustion gases and thermal radiation, resulting in thermal stresses and strains, while the cold walls are shielded from the combustion gases and run much cooler. Differential operating temperatures result in differential thermal expansion and contraction of the combustor components. Such differential thermal movement occurs both axially and radially, as well as during steady state operation and during transient operation of the engine as power is increased and decreased. This movement may particularly cause undesirable leakage or stress issues with the seals of the respective liner walls.

Accordingly, it is desirable to provide combustors with the cooling advantages of dual walled liners, while also minimizing undesirable leakage of cooling air. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, a combustor for a turbine engine includes a first liner and a second liner forming a combustion chamber with the first liner. The combustion chamber is configured to receive an air-fuel mixture for combustion therein and has a longitudinal axis that defines axial, radial and circumferential directions. The first liner is a first dual walled liner having a first hot wall facing the combustion chamber and a first cold wall that forms a first liner cavity with the first hot wall. The combustor further includes a primary air admission hole defined in the first hot wall and a first fixed liner seal between the first hot wall and the first cold wall proximate to the primary air admission hole.

In accordance with an exemplary embodiment, a combustor for a turbine engine includes a first liner and a second liner forming a combustion chamber with the first liner. The combustion chamber is configured to receive an air-fuel mixture for combustion therein and has a longitudinal axis that defines axial, radial and circumferential directions. The first liner is a first dual walled liner having a first hot wall facing the combustion chamber and a first cold wall that forms a first liner cavity with the first hot wall. The combustor further includes a first primary air admission hole defined in the first hot wall. A first fixed liner seal is formed between the first hot wall and the first cold wall proximate to the primary air admission hole. A first sliding liner seal is formed between the first hot wall and the first cold wall on the first end of the first liner cavity.

### BRIEF DESCRIPTION OF THE DRAWINGS

The present invention will hereinafter be described in conjunction with the following drawing figures, wherein like numerals denote like elements, and wherein:

FIG. 1 is a cross-sectional view of a gas turbine engine in accordance with an exemplary embodiment;

FIG. 2 is a cross-sectional view of a combustor for the gas turbine engine of FIG. 1 in accordance with an exemplary embodiment;

FIG. 3 is an enlarged cross-sectional view of a portion of the combustor of FIG. 2 in accordance with an exemplary embodiment;

FIG. 4 is an enlarged cross-sectional view of another portion of the combustor of FIG. 2 in accordance with an exemplary embodiment;

FIG. 5 is a plan view of another portion of the combustor of FIG. 2 in accordance with an exemplary embodiment;

FIG. 6 is an enlarged cross-sectional view of an aft inner sliding liner seal of the combustor of FIG. 2 in accordance with an exemplary embodiment;

FIG. 7 is an enlarged cross-sectional view of an aft outer sliding liner seal of the combustor of FIG. 2 in accordance with an exemplary embodiment; and

FIG. 8 is an enlarged cross-sectional view of a forward inner sliding liner seal of the combustor of FIG. 2 in accordance with an exemplary embodiment;

FIG. 9 is an enlarged cross-sectional view of a portion of a combustor in accordance with a further exemplary embodiment;

FIG. 10 is an enlarged cross-sectional view of another portion of the combustor of FIG. 9 in accordance with the further exemplary embodiment; and

FIG. 11 is a plan view of another portion of the combustor of FIG. 9 in accordance with the further exemplary embodiment.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Broadly, exemplary embodiments discussed herein relate to hybrid walled combustors. More particularly, inner and outer liners of a generally dual walled combustor each include hot and cold walls. The liners have a fixed seal between the hot and cold walls proximate to the primary air admission holes to prevent leakage from the liner cavities. The fixed seals may be formed by brazing together the hot and cold walls. The forward and aft ends of the liners may have sliding seals to accommodate relative axial and radial movements.

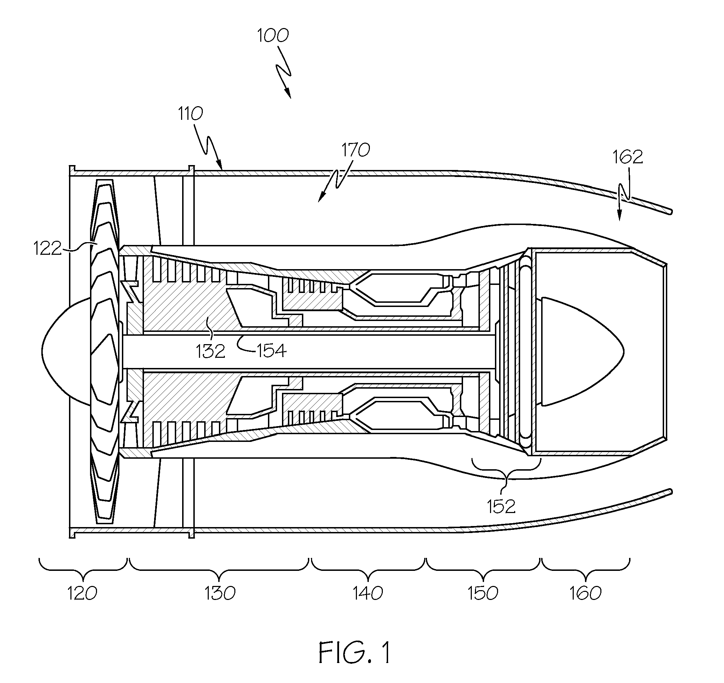

FIG. 1 is a cross-sectional view of a gas turbine engine 100, according to an exemplary embodiment. The gas turbine engine 100 can form part of, for example, an auxiliary power unit for an aircraft or a propulsion system for an aircraft. The gas turbine engine 100 may be disposed in an engine case 110 and may include a fan section 120, a compressor section 130, a combustion section 140, a turbine section 150, and an exhaust section 160. The fan section 120 may include a fan 122, which draws in and accelerates air. A fraction of the accelerated air exhausted from the fan 122 is directed through a bypass section 170 to provide a forward thrust. The remaining fraction of air exhausted from the fan 122 is directed into the compressor section 130.

The compressor section 130 may include a series of compressors 132, which raise the pressure of the air directed into it from the fan 122. The compressors 132 may direct the compressed air into the combustion section 140. In the combustion section 140, which includes an annular combustor, the high pressure air is mixed with fuel and combusted. The combusted air is then directed into the turbine section 150.

The turbine section 150 may include a series of turbines 152, which may be disposed in axial flow series. The combusted air from the combustion section 140 expands through the turbines 152 and causes them to rotate. The air is then exhausted through a propulsion nozzle 162 disposed in the exhaust section 160, providing additional forward thrust. In an embodiment, the turbines 152 rotate to thereby drive equipment in the gas turbine engine 100 via concentrically disposed shafts or spools. Specifically, the turbines 152 may drive the compressor 132 via one or more rotors 154.

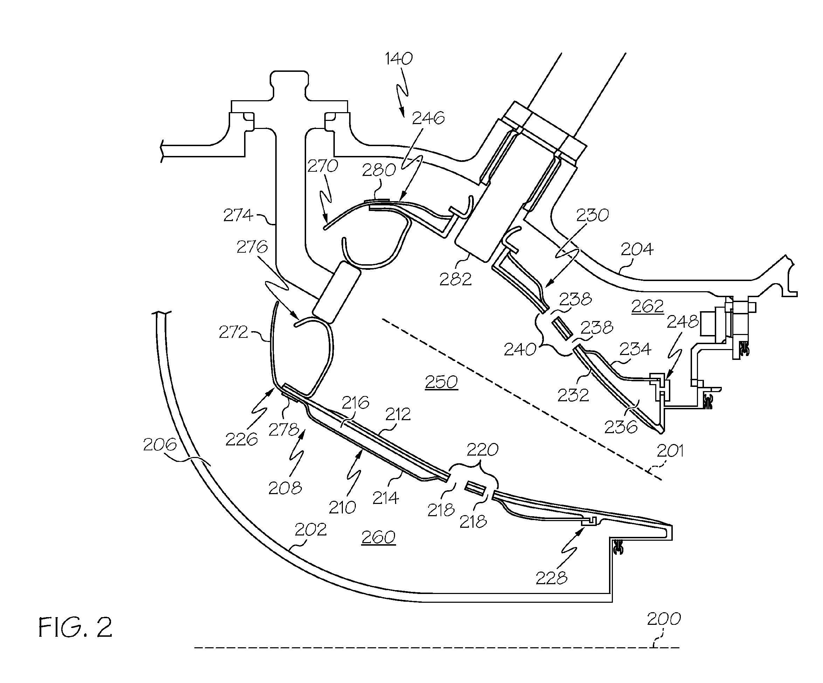

FIG. 2 is a more detailed cross-sectional view of the combustion section 140 of FIG. 1. In FIG. 2, only half the cross-sectional view is shown, the other half being substantially rotationally symmetric about a centerline and axis of rotation 200. Although the depicted combustion section 140 is an annular-type combustion section, any other type of combustor, such as a can combustor, can be provided. The depicted combustion section 140 may be, for example, a rich burn, quick quench, lean burn (RQL) combustor section.

The combustion section 140 comprises a radially inner case 202 and a radially outer case 204 concentrically arranged with respect to the inner case 202. The inner and outer cases 202, 204 circumscribe the axially extending engine centerline 200 to define an annular pressure vessel 206. The combustion section 140 also includes a combustor 208 residing within the annular pressure vessel 206.

The combustor 208 is defined by an inner liner 210 and an outer liner 230 that circumscribes the inner liner 210 to define an annular combustion chamber 250. The combustion chamber 250 may be considered to have a longitudinal axis 201 that generally defines radial, axial, and circumferential directions. The liners 210, 230 cooperate with cases 202, 204 to define respective inner and outer air plenums 260, 262.

The inner liner 210 is a dual walled liner with a "hot" wall 212 on the side of the combustion chamber 250 and a "cold" wall 214 on the side of the plenum 260. The hot and cold walls 212, 214 define a liner cavity 216 therebetween. Similar to the inner liner 210, the outer liner 230 shown is a dual walled liner with a "hot" wall 232 on the side of the combustion chamber 250 and a "cold" wall 234 on the side of the plenum 262. The hot and cold walls 232, 234 define a liner cavity 236 therebetween.

The combustor 208 additionally includes a front end assembly 270 with a shroud assembly 272, fuel injectors 274, a dome assembly 276, and retention ring 278. One fuel injector 274 is shown in the partial cross-sectional view of FIG. 2. In one embodiment, the combustor 208 includes a total of sixteen circumferentially distributed fuel injectors 274, but it will be appreciated that the combustor 208 could be implemented with more or less than this number of injectors 274. Each fuel injector 274 is secured to the outer case 204 and projects through a shroud port. Each fuel injector 274 introduces a swirling, intimately blended fuel and air mixture that supports combustion in the combustion chamber 250. As described in greater detail below, retention ring 278 is provided to couple together the inner liner 210, shroud assembly 272, and dome assembly 276, while retention ring 280 is provided to couple together the outer liner 212, shroud assembly 272, and dome assembly 276. An igniter 282 extends through the outer case 204 and the outer air plenum 262, and is coupled to the outer liner 230. It will be appreciated that more than one igniter 282 can be provided in the combustor 208, although only one is illustrated in FIG. 2. The igniter 282 is arranged downstream from the fuel injector 274 and is positioned to ignite the fuel and air mixture within the combustion chamber 250.

During engine operation, airflow exits a high pressure diffuser and deswirler at a relatively high velocity and is directed into the annular pressure vessel 206 of the combustor 208. The airflow enters the combustion chamber 250 through openings in the liners 210, 230, where it is mixed with fuel from the fuel injector 274, and the airflow is combusted after being ignited by the igniter 282. The combusted air exits the combustion chamber 250 and is delivered to the turbine section 150 (FIG. 1) for energy extraction.

The hot and cold walls 212, 214, 232, 234 are sealed relative to one another with a number of fixed liner seals 220, 240 and a number of sliding liner seals 226, 228, 246, 248. Additionally details about the hot and cold walls 212, 214, 232, 234 will now be provided.

The hot wall 212 of the inner liner 210 extends, at a forward end, from the dome assembly 276 and/or shroud assembly 272 at the sliding liner seal 226 to, at the aft end, the case 202. In some exemplary embodiments, the hot wall 212 may be fixed to the dome assembly 276. The cold wall 214 of the inner liner 210 extends, at a forward end, from the hot wall 212 at sliding liner seal 226 to, at the aft end, the hot wall 212 at the sliding liner seal 228. As described in greater detail below, the retention ring 278 and dome assembly 276 form the sliding liner seal 226 to enable relative movement for the hot wall 212 and cold wall 214 at the forward end. The hot wall 232 of the outer liner 230 extends, at the forward end, between the dome assembly 276 and/or shroud assembly 272 at the sliding liner seal 246 to, at the aft end, the case 204. In some exemplary embodiments, the hot wall 232 may be fixed to the dome assembly 276. The cold wall 234 of the outer liner 230 extends, at the forward end, from the hot wall 232 to, at the aft end, the hot wall 232 at the sliding liner seal 248. As described in greater detail below, the retention ring 280 and the dome assembly 276 form the sliding liner seal 246 to enable relative movement for the hot wall 232 and cold wall 234. Both the hot and cold walls 212, 214, 232, 234 are fully annular in shape. As described below, the hot and cold walls 212, 214, 232, 234 are permanently joined by welding or brazing in the particular regions to locally form a single wall, while in other regions, the cold walls 214, 234 are separated from the hot walls 212, 232 to form an impingement cavity with sliding seals to accommodate relative thermal movement at the forward and aft ends.

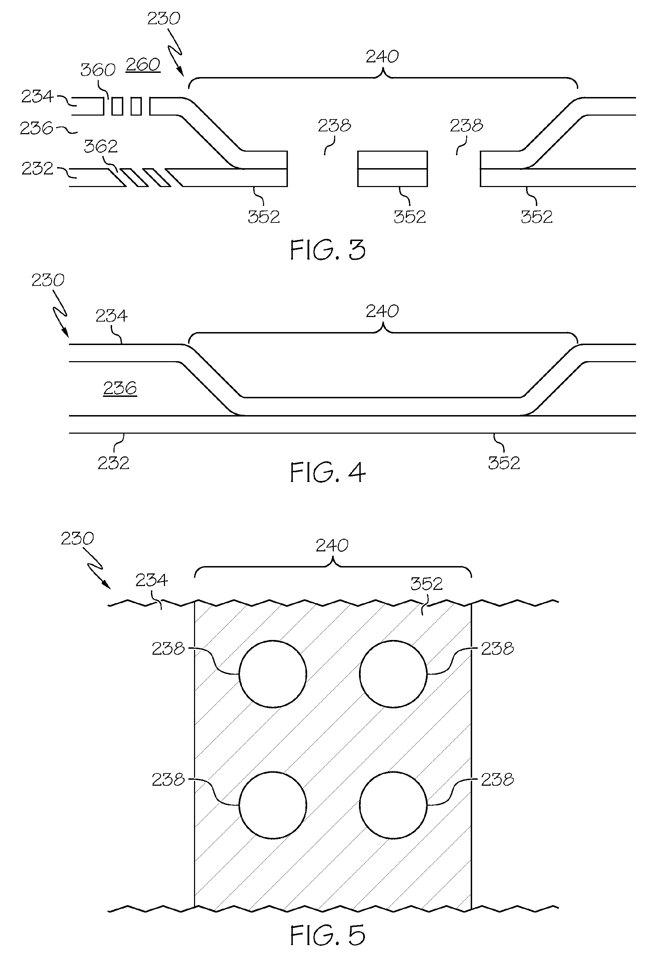

The inner and outer liners 210, 230 define a number of air admission holes 218, 238. In the exemplary embodiment, the hot and cold walls 212, 214 of the inner liner 210define air admission holes 218, and the hot and cold walls 232, 234 of the outer liner 230 define air admission holes 238. The air admission holes 218, 238 function to admit air into the combustion chamber 250 to support the combustion process, e.g., as primary air admission holes, dilution holes, and/or quench jet holes. The air admission holes 218, 238 may be arranged in axial and circumferential rows around the inner and outer liners 210, 230 in any suitable pattern. Although FIG. 3 depicts an embodiment with two rows of air admission holes 218, 238, each of the inner and outer liners 210, 230 may include one row of air admission holes or additional rows of air admission holes. In general, air admission holes 218, 238 will be sufficiently large to provide air jets which penetrate into the combusting gas flow to enhance mixing. As examples, typical diameter sizes for small engines will be in the range of 0.1-0.5 inches or may be up to 1 inches for larger engines.

In general, the hot and cold walls 212, 214 are fixed and sealed relative to one another in the areas proximate to the air admission holes 218 with the inner fixed liner seal 220 and are engaged with the sliding liner seals 226, 228 at the forward ends and the aft ends, respectively. As is discussed in greater detail below in reference to FIG. 3, the sliding liner seals 226, 228 seal the liner cavity 216 while accommodating relative movement between the hot and cold walls 212, 214 in one or more of the radial and axial directions resulting, for example, from thermal expansions and contractions. In one exemplary embodiment, the sliding liner seals 226, 228 only seal the hot and cold walls 212, 214 of the inner liner 210 and are separate from the seals that couple the combustion section 140 to the turbine section 150 (FIG. 1).

In general, the hot and cold walls 232, 234 are fixed and sealed relative to one another in the areas proximate to the air admission holes 238 with fixed inner liner seal 240 and are engaged with inner sliding liner seals 246, 248 at the forward ends and aft ends, respectively. As is discussed in greater detail below in reference to FIG. 4, the sliding liner seals 246, 248 seal the liner cavity 236 while accommodating relative movement between the hot and cold walls 232, 234 in one or more of the radial and axial directions resulting, for example, from thermal expansions and contractions. In one exemplary embodiment, the sliding liner seals 246, 248 only seal the hot and cold walls 232, 234 of the outer liner 230 and are separate from the seals that couple the combustion section 140 to the turbine section 150 (FIG. 1).

FIG. 3 is an enlarged cross-sectional view of a portion of the combustor 208 of FIG. 2 in accordance with an exemplary embodiment. FIG. 3 particularly shows the air admission holes 238 in the outer liner 230. In this exemplary embodiment, the air admission holes 238 are defined by both of the hot wall 232 and the cold wall 234.

FIG. 3 additionally depicts the outer fixed liner seal 240 between the hot wall 232 and the cold wall 234. The outer fixed liner seal 240 functions to seal the outer liner cavity 236 in the regions proximate to the air admission holes 238.

The outer fixed liner seal 240 is formed by brazing, welding, or otherwise fixing the hot wall 232 to the cold wall 234 in a brazed (or fixed) region 352. In one exemplary embodiment, brazing may include any metal-joining process whereby a filler metal is heated above melting point and distributed between two or more close-fitting parts by capillary action. Suitable filler material may include, for example, aluminum-silicon, copper, Copper-silver, copper-zinc, nickel alloy, amorphous brazing foil using nickel, iron, copper, silicon, boron, phosphorus, etc., and/or any other suitable metal. As such, in the brazed region 352, the hot and cold walls 232, 234 are permanently fixed or sealed together throughout. The outer fixed liner seal 240 is additionally shown in FIGS. 4 and 5. FIG. 4 is an enlarged cross-sectional view of another portion of the combustor 208 of FIG. 2 in accordance with an exemplary embodiment, and FIG. 5 is a plan view of another portion of the combustor 208 of FIG. 2 in accordance with an exemplary embodiment. FIG. 4 is a cross-sectional view similar to that of FIG. 3, e.g., in a similar radial and axial position, but in a different circumferential position that does not include air admission holes.

As shown, the outer fixed liner seal 240 is defined by the brazed region 352 that extends from an area just upstream of the air admission holes 238 to an area just downstream of the air admission holes 238. As such, the brazed region 352 encompasses the axial extent of the air admission holes 238. The brazed region 352 is arranged such that the outer fixed liner seal 240 completely surrounds and circumscribes that air admission holes 238. For example, in the view depicted by FIG. 4, the brazed region 352 at least partially forms the air admission holes 238. As a result of the brazed region 352 at the air admission holes 238, the liner cavity is eliminated in this area and an insert is not necessary.

The brazed region 352 is generally continuous, except for the areas defining the air admission holes 238. As such, the brazed region 352 extends between air admission holes 238 in both axial and circumferential directions. For example, the brazed region 352 shown in FIG. 4 corresponds to the circumferential areas between air admission holes 238. As another example, FIG. 5 schematically depicts the circumferential and axial extent of the brazed region 352.

Although not described in detail or depicted in an enlarged view, the inner fixed liner seal 220 has a similar arrangement to that of the outer fixed liner seal 240. As such, the inner fixed liner seal 220 is formed by a brazed region between the hot wall 212 and cold wall 214 in areas proximate to the air admission holes 218. In one exemplary embodiment, the inner fixed liner seal 220 extends from a position just upstream of the air admission holes 218 to an area just downstream of the air admission holes 218, and the inner fixed liner seal 220 includes brazed portions axially and circumferentially between the air admission holes 218.

As noted above, due to the arrangement of the inner and outer fixed liner seals 220, 240, the air admission holes 218, 238 may be formed without inserts or guide tubes extending between the hot walls 212, 232 and cold walls 214, 234. Considering the fixed liner seals 220, 240 function to seal the hot and cold walls 212, 214, 232, 234 without leakage, the liners 210, 230 function in these areas as single walled liners, while the separation between the hot and cold walls 212, 214, 232, 234 outside of the fixed liner seals 220, 240 enable the advantageous impingement effusion cooling arrangement of a dual walled liner. As such, the liners 210, 230 may be considered hybrid walled liners.

Referring briefly again to FIG. 3, the cross-sectional view of FIG. 3 additionally depicts a schematic representation of the impingement effusion cooling arrangement of the outer liner 230. Although not specifically shown, a similar impingement effusion cooling arrangement may be provided in any suitable area of the inner liner 210 and/or outer liner 230. As shown, the impingement cooling air may flow from the inner air plenum 260 through impingement cooling holes 360 in the cold wall 234 at an angle of approximately 90° relative to the cold wall 234, and then pass through effusion cooling holes 362 in the hot wall 232 as effusion cooling air at an angle of approximately 15°-45° to the surface of the hot wall 232 such that a film of cooling air forms on the hot wall 232. In an exemplary embodiment, this impingement effusion cooling arrangement enables improved cooling of the outer liner 230 with a consequent improvement in the durability of the combustor and/or lead to additional air available for the combustion process and a corresponding decrease in unwanted emissions.

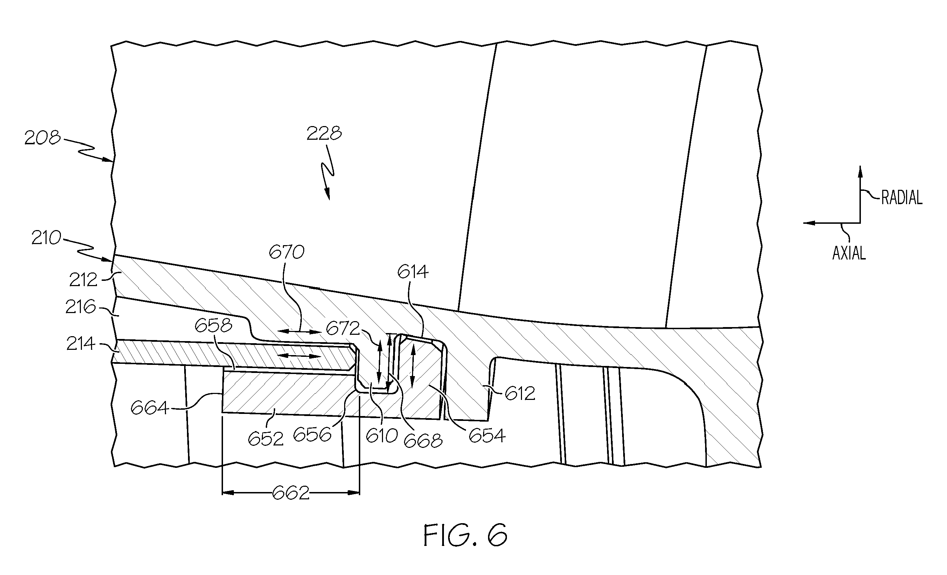

The sliding liner seals 226, 228, 246, 248, will now be discussed in greater detail. FIG. 6 is an enlarged cross-sectional view of an aft inner sliding liner seal 228 suitable for use in the combustor 208 of FIG. 2 in accordance with an exemplary embodiment. In particular, FIG. 6 shows an aft portion of the hot wall 212 and the cold wall 214 of the inner liner 210, and the aft inner sliding liner seal 228 functions to seal the aft end of the inner liner cavity 216 formed between the hot wall 212 and the cold wall 214. In general, the hot wall 212 of the inner liner 210 may include first and second radial flanges 610, 612. The first and second radial flanges 610, 612 cooperate to form a hot wall groove 614.

The aft inner sliding liner seal 228 is generally an annular, single-piece seal and includes an axial main body 652 and a radial flange 654. The axial main body 652 defines a groove 656. In general, the radial flange 654 is positioned within the hot wall groove 614 to retain the aft inner sliding liner seal 228 in an axial direction relative to the hot wall 212. The first radial flange 610 of the hot wall 212 is also positioned within the inner liner seal groove 656 to additionally retain the aft inner sliding liner seal 228 in an axial direction relative to the hot wall 212. The aft inner sliding liner seal 228 and hot wall 212 further define a seal cavity 658 extending generally in an axial direction. The aft end of the cold wall 214 is positioned within the seal cavity 658 to retain the cold wall 214 in a radial direction relative to the aft inner sliding liner seal 228.

In one exemplary embodiment, the aft inner sliding liner seal 228 is a split ring seal with ends that may be separated for installation over the hot and cold walls 212, 214 of the inner liner 210. The two ends may then be welded or otherwise attached together to complete the installation. Other installation mechanisms may also be provided. For example, the annular aft inner sliding liner seal 228 may actually have two or more pieces that are arranged around the hot and cold walls 212, 214 of the inner liner 210. In this alternate embodiment, the ends of the multi-piece aft inner sliding liner seal 228 may then be welded or otherwise attached to complete the installation.

As noted above, the hot and cold wall 212, 214 may have relative movement to one another in both the radial and axial directions as a result of, for example, temperature differentials. The aft inner sliding liner seal 228 is configured to accommodate this relative movement, as will now be described.

In particular, the cold wall 214 is not fixed in an axial direction relative to the hot wall 212 at the aft inner sliding liner seal 228. As such, the cold wall 214 may slide in an axial direction within the seal cavity 658, as indicated by arrows 670. This accommodates relative axial movement of the hot wall 212 and the cold wall 214. The cold wall 214 may have a relative movement of a first distance 662 and still be retained in a radial direction. In one exemplary embodiment, the first distance 662 may be the distance from the first radial flange 610 to a forward edge 664 of the aft inner sliding liner seal 228.

Additionally, the hot wall 212 is not fixed in a radial direction relative to the cold wall 214 at the aft inner sliding liner seal 228. As such, the first and second radial flanges 610, 612 of the hot wall 212 may slide in a radial direction, as indicated by arrows 672, relative to the radial flange 654 of the aft inner sliding liner seal 228. This accommodates relative radial movement of the hot wall 212 and the cold wall 214. The cold wall 214 may have a relative movement of a second distance 668 and still be retained in a radial direction. In one exemplary embodiment, the second distance 668 may be the depth of the hot wall groove 614 of the hot wall 212. Accordingly, the aft inner sliding liner seal 228 accommodates the relative movement between the hot and cold walls 212, 214 while maintaining the seal at the aft end of the inner liner cavity 216 to minimize leakage of cooling air and provide improved cooling effectiveness. The freedom of axial and radial movements may additionally relieve thermal stresses.

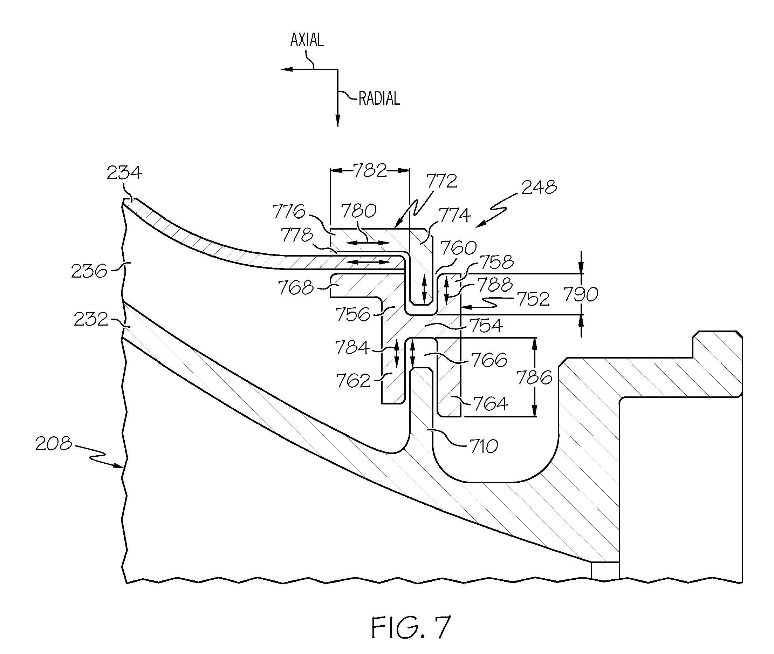

FIG. 7 is an enlarged cross-sectional view of an aft outer sliding liner seal 248 suitable for use in the combustor 208 of FIG. 2 in accordance with an exemplary embodiment. In particular, FIG. 7 shows an aft portion of the hot wall 232 and the cold wall 234 of the outer liner 230, and the aft outer sliding liner seal 248 functions to seal the aft end of the outer liner cavity 236 formed between the hot wall 232 and the cold wall 234. In general, the hot wall 232 of the outer liner 230 may include a radial flange 710.

The aft outer sliding liner seal 248 is generally an annular, two-piece seal and includes a first outer liner seal portion 752 and a second outer liner seal portion 772. The first outer liner seal portion 752 generally has a cross-sectional H-shape with a cross piece 754. The first outer liner seal portion 752 has a forward outer flange 756 and an aft outer flange 758 extending in a radial direction from the cross piece 754 and defining an outer radial groove 760. The first outer liner seal portion 752 further has a forward inner flange 762 and an aft inner flange 764 extending in a radial direction from the cross piece 754 and defining an inner radial groove 766. The first outer liner seal portion 752 additionally includes an axial flange 768 extending in a forward axial direction from the forward outer flange 756. As shown, the radial flange 710 of the hot wall 232 is positioned within the inner radial groove 766 to retain the first outer liner seal portion 752 and hot wall 232 relative to one another in an axial direction.

The aft outer sliding liner seal 248 further includes the second outer liner seal portion 772. The second outer liner seal portion 772 generally has a cross-sectional L-shape. The second outer liner seal portion 772 has a radial leg 774 and an axial leg 776. The axial leg 776 of the second outer liner seal portion 772 and the axial flange 768 of the first outer liner seal portion 752 define an axial cavity 778. The aft end of the cold wall 234 is positioned within the axial cavity 778, and the radial leg 774 of the second outer liner seal portion 772 is positioned within the outer radial groove 760.

In one exemplary embodiment, the first and second outer liner seal portions 752, 772 are a split ring seal portions that may have ends that separate for appropriate installation over the hot and cold walls 232, 234 of the outer liner 230. Particularly, the first outer liner seal portion 752 is installed on the hot wall 232, and the two ends of the first outer liner seal portion 752 may then be welded or otherwise attached together to complete the installation of the first outer liner seal portion 752. The cold wall 734 is then positioned over the hot wall 232 and first outer liner seal portion 752. Finally, the second outer liner seal portion 772 is installed over the cold wall 234 and the first outer liner seal portion 752. The two ends of the second outer liner seal portion 772 may then be welded or otherwise attached together to complete installation of the outer liner seal portion 772 and the aft outer sliding liner seal 248. Other installation arrangements may also be provided. For example, the annular first and second outer liner seal portions 752, 772 may actually have two or more pieces that are arranged around the hot and cold walls 232, 234 of the outer liner 230. In this alternate embodiment, the ends of the multi-piece outer liner seal portions 752, 772 may then be welded or otherwise attached to complete the installation.

As noted above, the hot and cold walls 232, 234 may have relative movement to one another in both the radial and axial directions as a result of, for example, temperature differentials. The aft outer sliding liner seal 248 is configured to accommodate this relative movement.

For example, the cold wall 234 is not fixed in an axial direction relative to the first outer liner seal portion 752 and the hot wall 232. In particular, the cold wall 234 slides within the axial cavity 778 as indicated by arrows 780. This accommodates relative axial movement of the hot wall 232 and the cold wall 234. The cold wall 234 may have a relative movement of a first distance 782 and still be retained in a radial direction. In one exemplary embodiment, the first distance 782 may be the depth of the axial cavity 778.

Additionally, neither the hot wall 232 nor the cold wall 234 is fixed in a radial direction relative to the first outer liner seal portion 752. In particular, the radial flange 710 of the hot wall 232 slides within the inner radial groove 766 as indicated by arrows 784. This accommodates relative radial movement between the hot wall 232 and the cold wall 234. The cold wall 234 may have a movement of a second distance 786 relative to the first outer liner seal portion 752 and still be retained in an axial direction. In one exemplary embodiment, the second distance 786 may be the depth of the inner radial groove 766. The radial leg 774 of the second outer liner seal portion 772 may also slide within the outer radial groove 760 of the first outer liner seal portion 752, as indicated by arrows 788. This also accommodates relative radial movement between the hot wall 232 and cold wall 234, particularly radial movement at a third distance 790 between the cold wall 234 and the first outer liner seal portion 752. In one exemplary embodiment, the third distance 790 may be the depth of the outer radial groove 760. Accordingly, the aft outer sliding liner seal 248 accommodates the relative movement between the hot and cold walls 232, 234 while maintaining the seal at the aft end of the outer liner cavity 236 to minimize leakage of cooling air and provide improved cooling effectiveness. The freedom of axial and radial movements may additionally relieve thermal stresses.

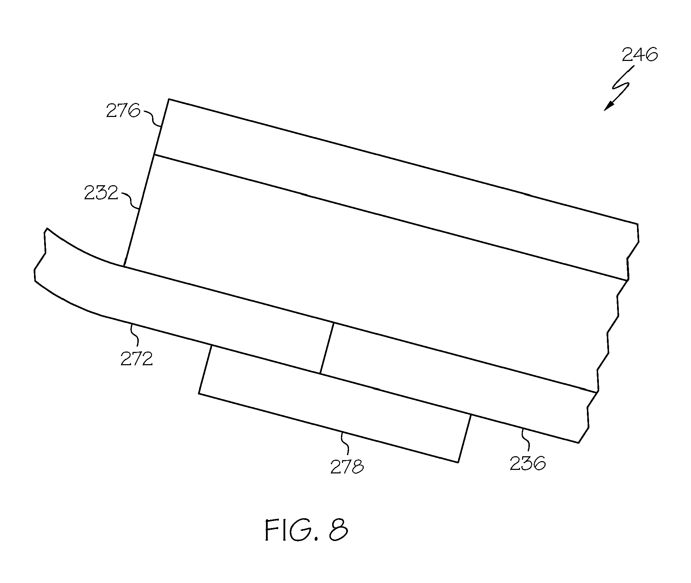

FIG. 8 is an enlarged cross-sectional view of the forward inner sliding liner seal 226 of the combustor 208 of FIG. 2 in accordance with an exemplary embodiment. The forward inner sliding liner seal 226 is formed between a retention ring 278 and the dome assembly 276 such that the hot wall 232 and the cold wall 234 are engaged between the retention ring 278 and the dome assembly 276. As a result of this arrangement, the hot wall 232 and the cold wall 234 may have a freedom of movement in the radial direction relative to the retention ring 278, dome assembly 276, and one another. The forward outer sliding liner seal 246 has a similar arrangement.

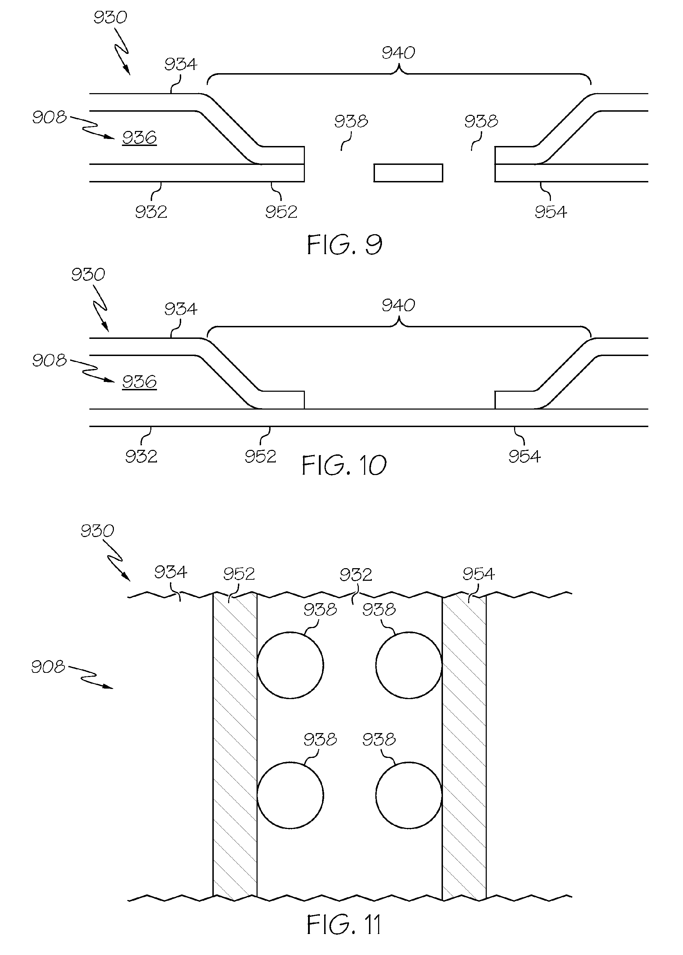

FIGS. 9-11 depict an alternate exemplary embodiment. FIG. 9 is an enlarged cross-sectional view of a portion of a combustor 908. Unless otherwise noted, the combustor 908 may be similar to combustor 208 discussed above. As such, FIG. 9 generally corresponds to the view depicted in FIG. 3. FIG. 10 is an enlarged cross-sectional view of another portion of the combustor 908 of FIG. 9. FIG. 10 generally corresponds to the view depicted in FIG. 4. FIG. 11 is a plan view of another portion of the combustor 908 of FIG. 9. FIG. 11 generally corresponds to the view depicted in FIG. 5. Although FIGS. 3-5 depicted the outer liner 230, the arrangement of FIGS. 9-11 may represent the inner or outer liner.

Referring initially to FIG. 9, as above, the combustor 908 includes a liner 930 with a hot wall 932 and a cold wall 934 that define a liner cavity 936. The liner 930 further includes air admission holes 938. In this embodiment, the air admission holes 938 are formed only by the hot wall 932, thereby eliminating the need for an insert or air guide tube. A fixed seal 940 functions to seal the liner cavity 936 at the air admission holes 938. In this exemplary embodiment, the fixed seal 940 is formed by a first brazed region 952 and a second brazed region 954. The brazed regions 952, 954 are discontinuous. As shown, the first brazed region 952 is positioned upstream of the air admission holes 938 and the second brazed region 954 is positioned downstream of the air admission holes 938. As additionally shown in FIGS. 10 and 11, the brazed regions 952, 954 generally extend in a circumferential direction about the liner 930, and are additionally discontinuous relative to one another in the circumferential direction. In effect, the brazed regions 952, 954 function to separate the cold wall 934 into discontinuous upstream and downstream portions.

As a result of this arrangement, the hot wall 932 and cold wall 934 function as a dual walled liner in areas other than the air admission holes 938, while the hot wall 932 functions as a single walled liner in areas proximate to the air admission holes 938. As such, the liner 930 may be considered a hybrid walled liner.

Although not shown in detail, the alternate exemplary embodiment described by FIGS. 9-11 may include sliding liner seals, such as sliding liner seals 226, 228, 246, 248 discussed above to enable relative axial and/or radial movement.

Accordingly, as a result of the sealing arrangements provided by the inner and outer liner seals 220, 226, 228, 240, 246, 248, cooling characteristics of the liners 210, 230 may be improved. Particularly, the liners 210, 230 may achieve a lower temperature, which will enable improved durability of the combustor. For example, the inner and outer liner seals 220, 226, 228, 240, 246, 248 enable effective impingement effusion cooling. As a result, a reduced amount of air can be used to effectively cool the liners 210, 230. Reduced temperatures may result in lower thermal stresses and improved component life in a cost-effective and reliable manner. In some embodiments, the inner and outer liner seals 220, 226, 228, 240, 246, 248 may provide satisfactory cooling with reduced weight, parts count and cost as compared with conventional arrangements. In various embodiments, the inner and outer liner seals 220, 226, 228, 240, 246, 248 may be used in combination with one another or individually. Different configurations and arrangements of the inner and outer sliding liner seals 220, 226, 228, 240, 246, 248 can be provided as necessary in dependence on the desired temperature of the respective liner 210, 230 and the sensitivity of the combustor 208 to additional cooling air. Exemplary embodiments may find beneficial uses in many industries, including aerospace and particularly in high performance aircraft, as well as automotive and electrical generation. Although a turbofan engine is referenced above, the inner and outer liner seals 220, 226, 228, 240, 246, 248 may be used in any type of engine, including gas turbine engines, turboshaft engines, turboprop engines, and static power generation units.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A combustor (208) for a turbine engine, comprising:
a first liner (210, 230);
a second liner (230, 210) forming a combustion chamber (250) with the first liner (210, 230), the combustion chamber (250) configured to receive an air-fuel mixture for combustion therein and having a longitudinal axis (201) that defines axial, radial and circumferential directions,
the first liner (210, 230) being a first dual walled liner comprising a first hot wall (212) facing the combustion chamber (250) and a first cold wall (214, 234) that forms a first liner cavity (216, 236) with the first hot wall (212, 232), the first liner cavity (216, 236) having first and second ends; and
a primary air admission hole (218, 238) defined in the first hot wall (212, 232); and
a first fixed liner seal (220, 240) between the first hot wall (212, 232) and the first cold wall (214, 234) proximate to the primary air admission hole (218, 238).

2. The combustor (208) of claim 1, wherein the first fixed liner seal (220, 240) has a first portion proximate to and upstream of the primary air admission hole (218, 238), and a second portion proximate to and downstream of the primary air admission hole (218, 238).

3. The combustor (208) of claim 1, wherein the first fixed liner seal (220, 240)extends in the circumferential direction about the longitudinal axis (201).

4. The combustor (208) of claim 1, wherein the first fixed liner seal (220, 240) at least partially forms the primary air admission hole (218, 238).

5. The combustor (208) of claim 4, wherein the primary air admission hole (218, 238) is a first primary air admission hole and wherein the combustor (208) further comprises a second primary air admission hole defined in the first cold wall (214, 234), the first fixed liner seal (220, 240) circumscribing the second primary air admission hole (218, 238).

6. The combustor (208) of claim 5, wherein the first fixed liner (210) seal at least partially forms the first primary air admission hole (218, 238) and the second primary air admission hole (218, 238).

7. The combustor (208) of claim 1, further comprising a first sliding liner seal (226, 228, 246, 248) configured to seal the first end of the first liner cavity (216) to accommodate relative movement of the first hot wall (212) and the first cold wall (212).

8. The combustor (208) of claim 7, wherein the first sliding liner seal (228, 248) is configured to accommodate relative movement of the first hot wall (212, 232) and the first cold wall (214, 234) in the axial and radial direction.

9. The combustor (208) of claim 8, wherein the first hot wall (212) includes radially extending first and second hot wall flanges (610, 612) that define a first hot wall groove (614), and wherein the first sliding liner seal (228) includes a radially extending liner seal flange (654) positioned within the first hot wall groove (614),
wherein the liner seal flange (654) is movable within the first hot wall groove (614) relative to the first and second hot wall flanges (610, 612) generally in the radial direction and is generally retained by the first and second hot wall flanges (610, 612) in the axial direction, wherein the first liner seal (228) and the first hot wall (212) define a first axial cavity (658), and wherein one end of the first cold wall (212) is positioned within the first axial cavity (658), wherein the cold wall (214) is movable within the first axial cavity (658) relative to the hot wall (212) and first liner seal (228) generally in the axial direction and is generally retained by the hot wall (212) and first liner seal (228) in the radial direction.

10. The combustor (208) of claim 7, wherein the first hot wall (232) includes radially extending first hot wall flange (710), and wherein the first liner seal (248) comprises first and second portions (752, 772), the first portion (752) having a first inner flange (762) and a second inner flange (764) that define an inner groove (766), the first hot wall flange (710) being positioned within the inner groove (766), wherein the first hot wall flange (710) is movable within the inner groove (766) relative to the first and second inner flanges (762, 764) generally in the radial direction and is generally retained by the first and second inner flanges in the axial direction, wherein the first portion (752) of the first liner seal (248) further includes a first outer flange (756) and a second outer flange (758) that define an outer groove (760), wherein the first liner seal (248) further includes a second portion (772) with a first leg (774) and a second leg (776) extending perpendicularly to the first leg (774), and wherein the first leg (774) of the second portion (772) is positioned within the outer groove (760) such that the second portion (772) is movable within the outer groove (760) generally in the radial direction and is generally retained by the first and second outer flanges (756, 758) in the axial direction, wherein first portion (752) further includes an axial flange (768) extending from the first outer flange (756), the second leg (776) of the second portion (772) and the axial flange (768) of the first portion (752) defining an axial cavity (778) for receiving one end of the cold wall (234), and
wherein the cold wall (234) is movable within the axial cavity (778) relative to the axial flange (768) of the first portion (752) and the second leg (776) of the second portion (772) generally in the axial direction and is generally retained by the axial flange (768) of the first portion (752) and the second leg (776) of the second portion (772) in the radial direction.
